# EUROPEAN PATENT APPLICATION

(11) **EP 4 239 108 A1**
(43) Date of publication of application: **06.09.2023**
(21) Application number: 22174790.0
(22) Date of filing: 23.05.2022
(51) Int. Cl.: C25D 3/06, C25D 3/12, C25D 5/14, C25D 7/00, C25D 21/12, C25D 3/34, C25D 3/56, C25D 5/00, A01N 33/12

(54) **A STERILIZING AND ENVIRONMENT-FRIENDLY COMPOSITE PLATING LAYER, A PREPARATION METHOD THEREOF AND A STERILIZING AND ENVIRONMENT-FRIENDLY PRODUCT**

(30) Priority: 01.03.2022 CN 202210194639
(71) Applicant: Jomoo Kitchen & Bath Co., Ltd., Nan'an City, Fujian 362300 (CN)
(72) Inventor: LIN, Xiaofa, Nan an City, Fujian (CN); LIN, Xiaoshan, Nan an City, Fujian (CN); LIU, Xiaolong, Nan an City, Fujian (CN); LIN, Xiaowei, Nan an City, Fujian (CN); PENG, Dongliang, Nan an City, Fujian (CN); ZHANG, Yining, Nan an City, Fujian (CN)
(74) Representative: Murgitroyd & Company

(57) **Abstract**

The present application relates to a sterilizing and environment-friendly composite plating layer, a preparation method thereof and a sterilizing and environment-friendly product. The sterilizing and environment-friendly composite plating layer includes: a semi-bright nickel layer, a high-sulfur nickel layer and an environment-friendly white chromium composite sterilizing layer; the semi-bright nickel layer is adapted to be positioned on a substrate having a sterilizing requirement; the high-sulfur nickel layer is disposed on the surface of a side of the semi-bright nickel layer away from the substrate; the environment-friendly white chromium composite sterilizing layer is disposed on the surface of a side of the high-sulfur nickel layer away from the substrate; the environment-friendly white chromium composite sterilizing layer has a nano-needle structure and is formed by a composite raw material containing sterilizing ammonium salt, and the concentration of the sterilizing ammonium salt in the composite raw material is 50-100 g/L. The sterilizing and environment-friendly composite plating layer and the sterilizing and environment-friendly product of the present application can be prepared directly by an electroplating method, and can have good broad-spectrum sterilizing effect without spraying antibacterial materials containing nano Ag⁺, Cu²⁺, and the sterilizing effect can be directly displayed.

## Description

### Technical Field

The application relates to, but is not limited to, the field of sterilization technology, and in particular to a sterilizing and environment-friendly composite plating layer, a preparation method thereof and a sterilizing and environment-friendly product.

### Background

At present, the surface materials of kitchen and bathroom hardware products in the market are mainly prepared by the traditional technology of electroplating hexavalent chromium. However, hexavalent chromium is a common heavy metal pollutant in the electroplating industry, and the electroplating waste liquid can pollute water sources and soil for a long time, bringing irreparable damage to the ecological environment. Moreover, hexavalent chromium is a swallowed poison/inhaled extreme poison, which may cause allergy when in contact with human skin, and is more likely to cause hereditary genetic defects, and may cause cancer when inhaled. Some products also adopt baking varnish or powder spraying processes, that is, spraying paint or powder on the surface of a substrate and curing, to prepare a paint layer or a powder layer; however, it has poor texture, low hardness, and low grade and is not wear resistant, not environment-friendly. In addition, the outbreak of Novel Coronavirus Pneumonia epidemic since December 2019 has aroused great attention from countries all over the world to the great health industry, especially to healthy kitchen and bathroom household products.

White is the color of kitchen and bathroom products favored by many consumers. At present, white kitchen and bathroom products can be prepared by electroplating technology. However, if white kitchen and bathroom products are prepared by electroplating hexavalent chromium technology, as mentioned above, it is dangerous to the environment and a human body, which is not environment-friendly and will also affect the health of production line workers. In addition, the industrialized white products prepared by electroplating technology alone cannot achieve sterilizing and antibacterial functions currently - some researchers have added Ag composite materials into an electroplating chromic acid solution, however, silver chromate would precipitate, resulting in no antibacterial function of the products obtained by electroplating. It is also usually necessary to spray a layer of antibacterial materials containing nano Ag⁺ on the surface of the product, or to prepare composite materials containing Ag⁺/Cu²⁺ by PVD technology. However, Ag⁺/Cu²⁺ is extremely easy to be absorbed by sweat pores of human skin, which will affect and damage immune system, nervous system, reproductive system and other organs of a human body. Moreover, the cost of electroplating antibacterial materials containing Ag⁺ or Ag⁺/Cu²⁺ by PVD method is high. Although common ammonium salts are effective antibacterial materials, the ammonium salt products used in the market are basically liquid, which acts on the surface of objects by spraying. After the ammonium salt liquids become dry, the antibacterial effect fails, resulting in a short antibacterial life. In addition, at present, most of the sterilizing and antibacterial effects of kitchen and bathroom products in the market are explained by the test reports of third-party organizations, and therefore, it is difficult to realize visualization.

### Summary

The following is a summary of the subject matter described in detail herein. This summary is not intended to limit the scope of protection of the present application.

The present application provides a sterilizing and environment-friendly composite plating layer, a preparation method thereof and a sterilizing and environment-friendly product. The sterilizing and environment-friendly composite plating layer and the sterilizing and environment-friendly product can be prepared directly by an electroplating method, and can have good broad-spectrum sterilizing effect without spraying antibacterial materials containing nano Ag⁺, Cu²⁺, and the sterilizing effect can be directly displayed.

The present application provides a sterilizing and environment-friendly composite plating layer, which includes: a semi-bright nickel layer, a high-sulfur nickel layer and an environment-friendly white chromium composite sterilizing layer; the semi-bright nickel layer is adapted to be positioned on a substrate having a sterilizing requirement; the high-sulfur nickel layer is disposed on the surface of a side of the semi-bright nickel layer away from the substrate; the environment-friendly white chromium composite sterilizing layer is disposed on the surface of a side of the high-sulfur nickel layer away from the substrate; the environment-friendly white chromium composite sterilizing layer has a nano-needle structure and is formed by a composite raw material containing sterilizing ammonium salt, and the concentration of the sterilizing ammonium salt in the composite raw material is 50-100 g/L.

In an embodiment of the present application, the sterilizing ammonium salt may be selected from any one or more of alkyl quaternary ammonium iodide salt and alkyl aromatic hydrocarbyl quaternary ammonium iodide salt.

In an embodiment of the present application, the carbon chain length of the alkyl groups in the alkyl quaternary ammonium iodide salt and the alkyl aromatic hydrocarbyl quaternary ammonium iodide salt may be 12-18.

In an embodiment of the present application, the sterilizing ammonium salt may be selected from any one or more of dodecyl dimethyl benzyl ammonium iodide, dodecyl trimethyl ammonium iodide, tetradecyl dimethyl benzyl ammonium iodide, tetradecyl trimethyl ammonium iodide, hexadecyl dimethyl benzyl ammonium iodide, hexadecyl trimethyl ammonium iodide, octadecyl dimethyl benzyl ammonium iodide, and octadecyl trimethyl ammonium iodide.

In an embodiment of the present application, the raw material of the environment-friendly white chromium composite sterilizing layer may include: quaternary ammonium iodide salt with a concentration of 50-100 g/L, anhydrous citric acid crystal with a concentration of 10-20 g/L, Trichrome ICE Salts with a concentration of 150-400 g/L, Trichrome ICE Part 1 with a concentration of 150-350 mL/L, Trichrome ICE Make Up with a concentration of 10-25 ml/L and Trichrome ICE WA with a concentration of 0.5-5 mL/L.

In an embodiment of the present application, the raw material of the high-sulfur nickel layer may include: nickel sulfate with a concentration of 350-450 g/L, nickel chloride with a concentration of 50-100 g/L, boric acid with a concentration of 40-60 g/L, and high-sulfur nickel HAS 90 with a concentration of 2-4 mL/L.

In an embodiment of the present application, the raw material of the semi-bright nickel layer may include: nickel sulfate with a concentration of 350-450 g/L, nickel chloride with a concentration of 30-50 g/L, boric acid with a concentration of 40-60 g/L, makeup agent NIB-90 with a concentration of 5-10 mL/L, main brightener NIB-90 with a concentration of 1-2 mL/L and wetting agent Ni-66B with a concentration of 1-5 mL/L.

In an embodiment of the present application, the thickness of the semi-bright nickel layer may be 20-50 µm, the thickness of the high-sulfur nickel layer may be 20-50 µm, and the thickness of the environment-friendly white chromium composite sterilizing layer may be > 0.5 µm.

The present application further provides a preparation method of the sterilizing and environment-friendly composite plating layer as described above, which includes the following steps:
(1) Pretreating the substrate: including polishing and cleaning treatments;
(2) Electroplating the semi-bright nickel layer on the surface of the pretreated substrate;
(3) Electroplating the high-sulfur nickel layer on the surface of the semi-bright nickel layer; and
(4) Electroplating the environment-friendly white chromium composite sterilizing layer on the surface of the high-sulfur nickel layer.

In an embodiment of the present application, the conditions for electroplating the semi-bright nickel layer in step (2) may include: a temperature of 50-60°C, a cathode current density of 5-10 A/dm², and an electroplating time of 600-2700 s.

In an embodiment of the present application, the conditions for electroplating the high-sulfur nickel layer in step (3) may include: a temperature of 45-55°C, a voltage of 5-10 V, a cathode current density of 3-12 A/dm², and an electroplating time of 600-2700 s.

In an embodiment of the present application, the conditions for electroplating the environment-friendly white chromium composite sterilizing layer in step (4) may include: a temperature of 50-60°C, a cathode current density of 5-10 A/dm², and an electroplating time of 600-900 s.

The present application further provides a sterilizing and environment-friendly product, which includes a substrate and the sterilizing and environment-friendly composite plating layer as described above.

In an embodiment of the present application, the substrate may be a metal substrate or a plastic substrate.

In an embodiment of the present application, the sterilizing and environment-friendly product may be a sterilizing product used in kitchen or bathroom.

In the embodiments of the present application, the semi-bright nickel layer, the high-sulfur nickel layer and the environment-friendly white chromium composite sterilizing layer are prepared sequentially on the surface of a substrate by an electroplating method, and thus a sterilizing and environment-friendly composite plating layer is obtained on the surface of the substrate. The preparation process is simple and low cost, and the environment-friendly white chromium composite sterilizing plating layer is formed by electroplating an environment-friendly trivalent chromium material, which avoids the problem that the traditional process of electroplating hexavalent chromium material is not environment-friendly and affects the health of production line workers. The environment-friendly white chromium composite sterilizing layer of the sterilizing and environment-friendly composite plating layer can present white color, such that the sterilizing and environment-friendly composite plating layer can show white color and has soft color and beautiful appearance; in addition, the environment-friendly white chromium composite sterilizing layer is formed from composite raw materials containing sterilizing ammonium salt and has a nano-needle structure, so that the sterilizing and environment-friendly composite plating layer have better, rapid and broad-spectrum sterilizing effect, and there is no need to spray antibacterial materials containing nano Ag⁺, Cu²⁺, and the sterilizing effect can be directly displayed through high-definition display technology. In addition, the sterilizing and environment-friendly composite plating layer according to the embodiments of the present application also has the advantage of corrosion resistance.

Additional features and advantages of the present application will be set forth in the description which follows, and in part will become apparent from the description, or may be learned by practice of the application. Other advantages of the present application can be realized and obtained by embodiments described in the description and the drawings.

### Brief Description of Drawings

The accompanying drawings are used to provide an understanding of the technical schemes of the present application, and constitute a part of the specification. They are used to explain the technical schemes of the present application together with the embodiments of the present application, and do not constitute a limitation to the technical schemes of the present application.
FIG. 1 is a schematic structural diagram of the front view of a sterilizing and environment-friendly composite plating layer according to an embodiment of the present application;
FIG. 2 is an appearance diagram of a sterilizing and environment-friendly product prepared according to Example 1 of the present application;
FIG. 3 is an Atomic Force Microscope (AFM) diagram of the surface morphology of the environment-friendly white chromium composite sterilizing layer of a sterilizing and environment-friendly product according to Example 1 of the present application;
FIG. 4 is an Atomic Force Microscope (AFM) diagram of the surface morphology of the white chromium composite layer of the environment-friendly product according to Comparative Example 1 of the present application;
FIG. 5 is an Atomic Force Microscope (AFM) diagram of the surface morphology of the white chromium composite layer of the environment-friendly product according to Comparative Example 2 of the present application;
FIG. 6 is an Atomic Force Microscope (AFM) diagram of the surface morphology of the white chromium composite layer of the environment-friendly product according to Comparative Example 3 of the present application;
FIG. 7 is an Atomic Force Microscope (AFM) diagram of the surface morphology of the white chromium composite layer of the environment-friendly product according to Comparative Example 4 of the present application;
FIG. 8 is real-time visualization microscope diagrams of the sterilizing and environment-friendly product according to Example 1 of the present application, in which the left picture is a visualization microscope diagram at the time of starting timing (the 1^{st} second) after the bacteria are allowed to stand on the surface of the sample for 2 min, and the right picture is a visualization microscope diagram at the 3^{rd} second after starting timing after the bacteria are allowed to stand on the surface of the sample for 2 min;
FIG. 9 is real-time visualization microscope diagrams of the environment-friendly product according to Comparative Example 4 of the present application, in which the left picture is a visualization microscope diagram at the time of starting timing (the 1^{st} second) after the bacteria are allowed to stand on the surface of the sample for 2 min, and the right picture is a visualization microscope diagram at the 3^{rd} second after starting timing after the bacteria are allowed to stand on the surface of the sample for 2 min.

### Detailed Description

In order to make the objectives, technical schemes and advantages of the present application clearer, the examples of the present application will be described in detail below in connection with the drawings. It should be noted that the examples in the present application and the features in the examples may be arbitrarily combined with each other without conflict.

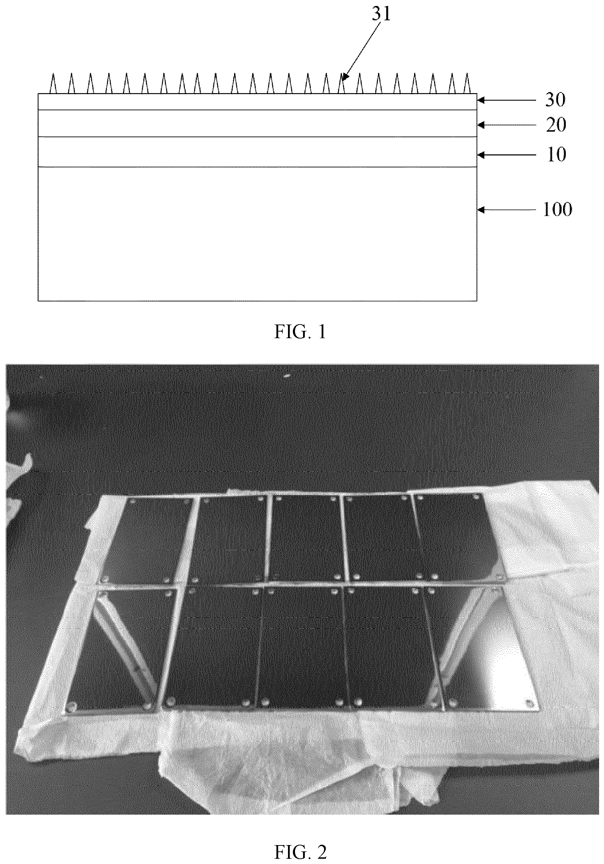

An embodiment of the present application provides a sterilizing and environment-friendly composite plating layer, as shown in FIG. 1. The sterilizing and environment-friendly composite plating layer includes a semi-bright nickel layer 10, a high-sulfur nickel layer 20 and an environment-friendly white chromium composite sterilizing layer 30; the semi-bright nickel layer 10 is adapted to be positioned on a substrate 100 having a sterilizing requirement; the high-sulfur nickel layer 20 is disposed on the surface of a side of the semi-bright nickel layer 10 away from the substrate 100; the environment-friendly white chromium composite sterilizing layer 30 is disposed on the surface of a side of the high-sulfur nickel layer 20 away from the substrate 100; the environment-friendly white chromium composite sterilizing layer 30 has a nano-needle structure 31 and is formed by a composite raw material containing sterilizing ammonium salt, and the concentration of the sterilizing ammonium salt in the composite raw material is 50-100 g/L.

In an embodiment of the present application, the sterilizing ammonium salt may be selected from any one or more of alkyl quaternary ammonium iodide salt and alkyl aromatic hydrocarbyl quaternary ammonium iodide salt.

In an embodiment of the present application, the carbon chain length of the alkyl groups in the alkyl quaternary ammonium iodide salt and the alkyl aromatic hydrocarbyl quaternary ammonium iodide salt may be 12-18.

In an embodiment of the present application, the sterilizing ammonium salt may be selected from any one or more of dodecyl dimethyl benzyl ammonium iodide, dodecyl trimethyl ammonium iodide, tetradecyl dimethyl benzyl ammonium iodide, tetradecyl trimethyl ammonium iodide, hexadecyl dimethyl benzyl ammonium iodide, hexadecyl trimethyl ammonium iodide, octadecyl dimethyl benzyl ammonium iodide, and octadecyl trimethyl ammonium iodide.

In an embodiment of the present application, the raw material of the environment-friendly white chromium composite sterilizing layer may include: quaternary ammonium iodide salt with a concentration of 50-100 g/L, anhydrous citric acid crystal with a concentration of 10-20 g/L, Trichrome ICE Salts with a concentration of 150-400 g/L, Trichrome ICE Part 1 with a concentration of 150-350 mL/L, Trichrome ICE Make Up with a concentration of 10-25 ml/L and Trichrome ICE WA with a concentration of 0.5-5 mL/L.

In an embodiment of the present application, the raw material of the high-sulfur nickel layer may include: nickel sulfate with a concentration of 350-450 g/L, nickel chloride with a concentration of 50-100 g/L, boric acid with a concentration of 40-60 g/L, and high-sulfur nickel HAS 90 with a concentration of 2-4 mL/L.

In an embodiment of the present application, the raw material of the semi-bright nickel layer may include: nickel sulfate with a concentration of 350-450 g/L, nickel chloride with a concentration of 30-50 g/L, boric acid with a concentration of 40-60 g/L, makeup agent NIB-90 with a concentration of 5-10 mL/L, main brightener NIB-90 with a concentration of 1-2 mL/L and wetting agent Ni-66B with a concentration of 1-5 mL/L.

In the description of the present application, the concentration (g/L, mL/L) of a raw material for preparing the semi-bright nickel layer, the high-sulfur nickel layer or the environment-friendly white chromium composite sterilizing layer refers to the concentration of the raw material in a mixed solution consisting of all raw materials for preparing the semi-bright nickel layer, the high-sulfur nickel layer or the environment-friendly white chromium composite sterilizing layer.

In an embodiment of the present application, the thickness of the semi-bright nickel layer may be 20-50 µm, the thickness of the high-sulfur nickel layer may be 20-50 µm, and the thickness of the environment-friendly white chromium composite sterilizing layer may be > 0.5 µm.

In the sterilizing and environment-friendly composite plating layers according to the embodiments of the present application, the semi-bright nickel layer and the high-sulfur nickel layer form a corrosion-resistant composite layer. Among them, the raw materials of the semi-bright nickel layer do not contain sulfur, and therefore, the semi-bright nickel layer has low stress, excellent leveling, and good flexibility; the raw materials of the high-sulfur nickel layer contain more sulfur; the combination of high thickness (e.g. 20-50 µm) semi-bright nickel layer and high thickness (e.g. 20-50 µm) high-sulfur nickel layer (different from each other in sulfur content) can form potential difference, which can effectively slow down the corrosion rate of substrate and improve the corrosion resistance. The thickness of the environment-friendly white chromium composite sterilizing layer may be > 0.5 µm. In this case, the environment-friendly white chromium composite sterilizing layer as a decorative external appearance layer can exhibit effective protection and wear resistance.

In an embodiment of the present application, the L value of the environment-friendly white chromium composite sterilizing layer is 76 to 78, the a value is -1 to +1, and the b value is -1 to +1.

An embodiment of the present application further provides a preparation method of the sterilizing and environment-friendly composite plating layer as described above, which includes the following steps:
(1) Pretreating the substrate: including polishing and cleaning treatments;
(2) Electroplating the semi-bright nickel layer on the surface of the pretreated substrate;
(3) Electroplating the high-sulfur nickel layer on the surface of the semi-bright nickel layer; and
(4) Electroplating the environment-friendly white chromium composite sterilizing layer on the surface of the high-sulfur nickel layer.

In an embodiment of the present application, the cleaning treatment in the pretreatment in step (1) may include fine cleaning processes such as wax removal, oil removal, electrolysis, pure water cleaning, etc.

In an embodiment of the present application, the conditions for electroplating the semi-bright nickel layer in step (2) may include: a temperature of 50-60°C, a cathode current density of 5-10 A/dm², and an electroplating time of 600-2700 s.

In an embodiment of the present application, the conditions for electroplating the high-sulfur nickel layer in step (3) may include: a temperature of 45-55°C, a voltage of 5-10 V, a cathode current density of 3-12 A/dm², and an electroplating time of 600-2700 s.

In an embodiment of the present application, the conditions for electroplating the environment-friendly white chromium composite sterilizing layer in step (4) may include: a temperature of 50-60°C, a cathode current density of 5-10 A/dm², and an electroplating time of 600-900 s.

In the embodiments of the present application, the semi-bright nickel layer, the high-sulfur nickel layer and the environment-friendly white chromium composite sterilizing layer are prepared sequentially on the surface of a substrate by an electroplating method, and thereby, a sterilizing and environment-friendly composite plating layer is obtained on the surface of the substrate. The preparation process is simple and low cost, and the environment-friendly white chromium composite sterilizing plating layer is formed by electroplating an environment-friendly trivalent chromium material, which avoids the problem that the traditional process of electroplating hexavalent chromium material is not environment-friendly and affects the health of production line workers. The environment-friendly white chromium composite sterilizing layer of the sterilizing and environment-friendly composite plating layer can present white color, such that the sterilizing and environment-friendly composite plating layer can show white color and has soft color and beautiful appearance; in addition, the environment-friendly white chromium composite sterilizing layer is formed from composite raw materials containing sterilizing ammonium salt and has a nano-needle structure, so that the sterilizing and environment-friendly composite plating layer has better, rapid and broad-spectrum sterilizing effect, and there is no need to spray antibacterial materials containing nano Ag⁺, Cu²⁺, and the sterilizing effect can be directly displayed through high-definition display technology. In addition, the sterilizing and environment-friendly composite plating layer according to the embodiments of the present application also has the advantage of corrosion resistance.

An embodiment of the present application further provides a sterilizing and environment-friendly product, which includes a substrate and the sterilizing and environment-friendly composite plating layer as described above.

In an embodiment of the present application, the substrate may be a metal substrate such as aluminum alloy, copper alloy, zinc alloy, magnesium alloy, stainless steel, alloy steel, etc.; or a plastic substrate such as ABS plastic, etc.

In an embodiment of the present application, the sterilizing and environment-friendly product may be a sterilizing product used in kitchen or bathroom, for example, a vegetable wash basin, a knife, a faucet, a hand wash basin, a pendant, a shower, a shower room handle, a frame in a shower room, etc.

In the following Examples and Comparative Examples, the makeup agent NIB-90, the main brightener NIB-90 and the wetting agent Ni-66B were purchased from Xiamen Huahui New Material Technology Co., Ltd.,; the high-sulfur nickel HAS 90 solution, Trichrome ICE Salts, Trichrome ICE Part 1, Trichrome ICE Make Up and Trichrome ICE WA were purchased from Atotech (China) Chemical Co., Ltd. (ATOTECH), in which the code for Trichrome ICE Salts is 1687212, the code for Trichrome ICE Part 1 is 1687214, the code for Trichrome ICE Make Up is 1687213 and the code for Trichrome ICE WA is 1687218; and hexadecyl hexadecyl trimethyl ammonium iodide was purchased from Jinjinle Chemicals Co., Ltd..

### Example 1

### (1) Pretreatment of electroplating

Polishing and fine cleaning treatments (including wax removal, oil removal, electrolysis and pure water cleaning) of copper alloy substrate are performed;

### (2) Electroplating the semi-bright nickel layer on the surface of the pretreated substrate

The electroplating solution for forming the semi-bright nickel layer may includes: nickel sulfate with a concentration of 350 g/L, nickel chloride with a concentration of 40 g/L, boric acid with a concentration of 45 g/L, makeup agent NIB-90 with a concentration of 7 mL/L, main brightener NIB-90 with a concentration of 1.2 mL/L and wetting agent Ni-66B with a concentration of 2 mL/L;

The process conditions of electroplating include: temperature of 55°C, cathode current density of 5A/dm², and electroplating time of 2700 s;

### (3) Electroplating the high-sulfur nickel layer on the surface of the semi-bright nickel layer

The electroplating solution for forming the high-sulfur nickel layer includes: nickel sulfate with a concentration of 380 g/L, nickel chloride with a concentration of 70 g/L, boric acid with a concentration of 45 g/L, and high-sulfur nickel HAS 90 with a concentration of 3 mL/L;

The process conditions of electroplating include: temperature of 50°C, a voltage of 8V, cathode current density of 5 A/dm², and electroplating time of 2700 s;

### (4) Electroplating the environment-friendly white chromium composite sterilizing layer on the surface of the high-sulfur nickel layer

The electroplating solution for forming the environment-friendly white chromium composite sterilizing layer includes: hexadecyl trimethyl ammonium iodide with a concentration of 50 g/L, anhydrous citric acid crystal with a concentration of 10 g/L, Trichrome ICE Salts with a concentration of 300 g/L, Trichrome ICE Part 1 with a concentration of 250 mL/L, Trichrome ICE Make Up with a concentration of 18 ml/L and Trichrome ICE WA with a concentration of 1 mL/L;

The process conditions of electroplating include: temperature of 55°C, cathode current density of 5 A/dm², and electroplating time of 900 s.

### Example 2

The preparation method is substantially the same as that of Example 1, except that the concentration of hexadecyl trimethyl ammonium iodide is 100 g/L in the electroplating solution used for electroplating the environment-friendly white chromium composite sterilizing layer in Step (4).

### Comparative example 1

The preparation method is substantially the same as that of Example 1, except that the concentration of hexadecyl trimethyl ammonium iodide is 150 g/L in the electroplating solution used for electroplating the environment-friendly white chromium composite sterilizing layer in Step (4).

### Comparative example 2

The preparation method is substantially the same as that of Example 1, except that the concentration of anhydrous citric acid crystal is 0 g/L in the electroplating solution used for electroplating the environment-friendly white chromium composite sterilizing layer in Step (4).

### Comparative example 3

The preparation method is substantially the same as that of Example 1, except that the concentration of hexadecyl trimethyl ammonium iodide is 0 g/L in the electroplating solution used for electroplating the environment-friendly white chromium composite sterilizing layer in Step (4).

### Comparative example 4

The preparation method is substantially the same as that of Example 1, except that the concentration of anhydrous citric acid crystal is 0 g/L and the concentration of hexadecyl trimethyl ammonium iodide is 0 g/L in the electroplating solution used for electroplating the environment-friendly white chromium composite sterilizing layer in Step (4).

FIG. 2 is an appearance diagram of a sterilizing and environment-friendly product prepared according to Example 1 of the present application (the appearance of the products prepared in Example 2 and Comparative Examples 1-4 is substantially the same as that in FIG. 2). It can be seen that the sterilizing and environment-friendly product according to the Examples of the present application has a white plating layer with soft color.

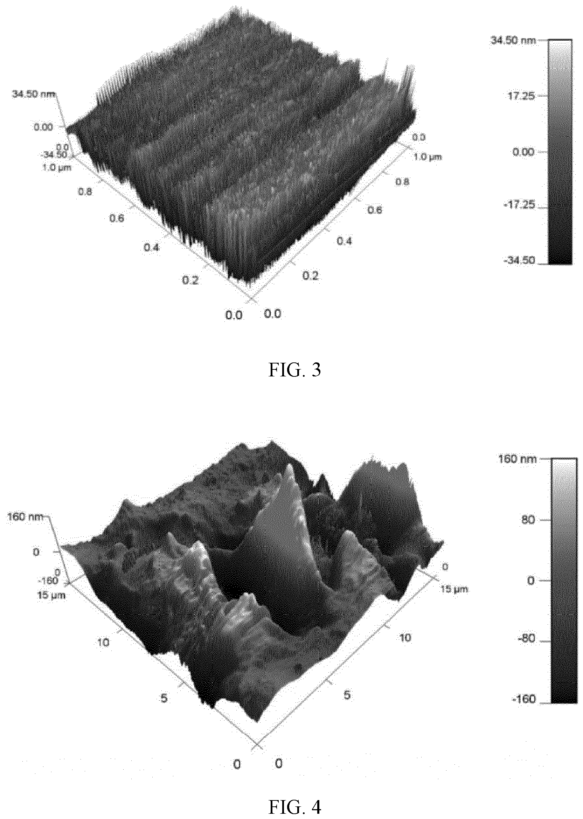

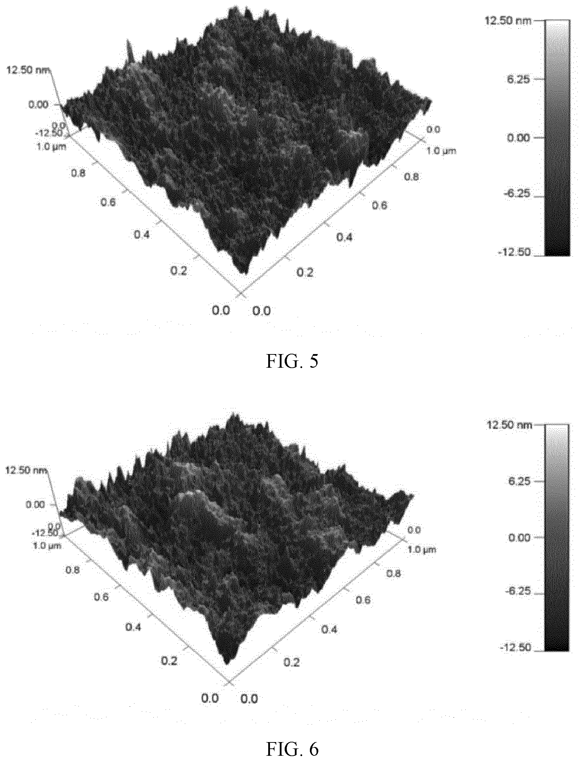

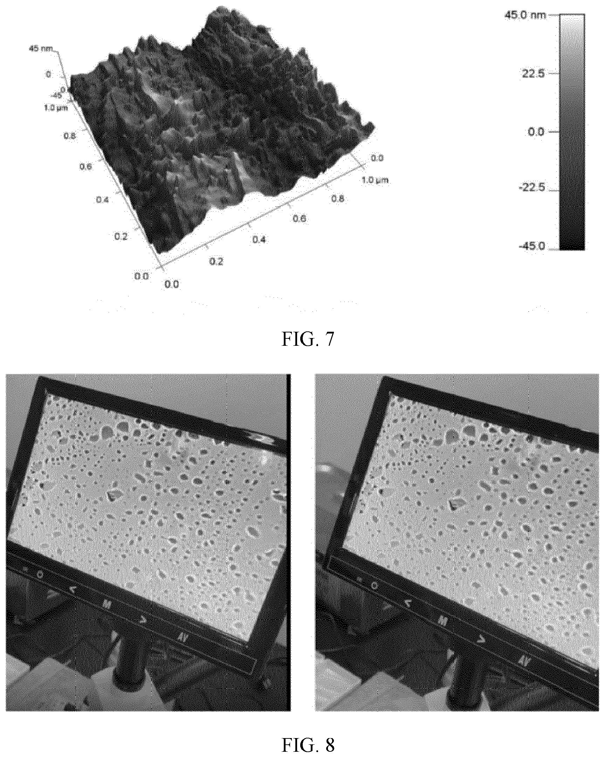

FIG. 3 is an Atomic Force Microscope (AFM) diagram of the surface morphology of the environment-friendly white chromium composite sterilizing layer of a sterilizing and environment-friendly product according to Example 1 of the present application; FIG. 4 is an Atomic Force Microscope (AFM) diagram of the surface morphology of the white chromium composite layer of the environment-friendly product according to Comparative Example 1 of the present application; FIG. 5 is an Atomic Force Microscope (AFM) diagram of the surface morphology of the white chromium composite layer of the environment-friendly product according to Comparative Example 2 of the present application; FIG. 6 is an Atomic Force Microscope (AFM) diagram of the surface morphology of the white chromium composite layer of the environment-friendly product according to Comparative Example 3 of the present application; FIG. 7 is an Atomic Force Microscope (AFM) diagram of the surface morphology of the white chromium composite layer of the environment-friendly product according to Comparative Example 4 of the present application.

As can be seen from FIG. 3, the environment-friendly white chromium composite sterilizing layer of Example 1 of the present application does form a nano-needle structure, and the height of the nano-needle is 10-40 nm; in addition, the environment-friendly white chromium composite sterilizing layer of the sterilizing and environment-friendly products of Example 2 of the present application also forms a nano-needle structure. However, the white chromium composite layers in Comparative Examples 1-4 do not form nano-needle structures, which indicates that the formation of a nano-needle structure requires the participation of quaternary ammonium salts such as hexadecyl trimethyl ammonium iodide and anhydrous citric acid crystal with appropriate concentration.

The Lab values of the sterilizing and environment-friendly products in the Examples are tested according to Chinese national standard GB/T 17934.1-1999. Three positions with different heights were selected for one product for testing during the test. After testing, the L values of the product are 76 to 78, a values are -1 to +1, and b values are -1 to +1.

The corrosion resistance of the products in the Examples and the Comparative Examples is tested by CASS salt spray test method according to the Chinese national standard GB/T 6461-2002. The results are shown in Table 1.

The antimicrobial properties of the products of the Examples and Comparative Examples are tested according to the Chinese national standard GB/T21510-2008 (by Escherichia coli test). The results are shown in Table 1.

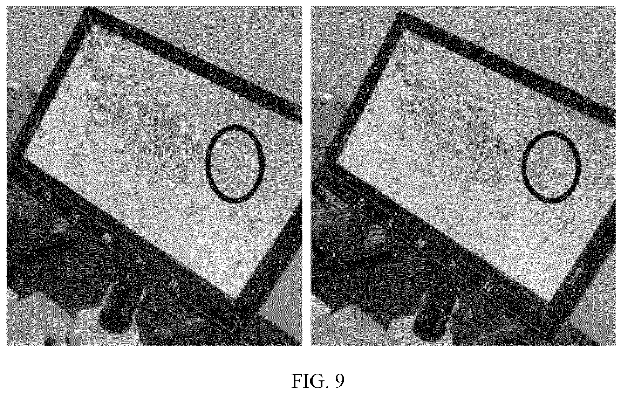

According to Appendix C of Chinese national standard GB/T21510-2008, Escherichia coli was placed on the surface of the products of Examples and Comparative Examples on the side away from the substrate (for the products of Examples, on the surface of the environment-friendly white chromium composite sterilizing layer), and allowed to stand for 2 min, and then the state of bacterial on the surface is observed by a double transmission biological microscope. It was observed that the bacteria on the surface of the sterilizing products of the Examples are immobile; however, the bacteria on the surface of the products of the Comparative Examples were constantly flowing, and the number of flowing bacteria was almost unchanged. Among them, FIG. 8 is real-time visualization microscope diagrams of the sterilizing and environment-friendly product according to Example 1 of the present application, in which the left picture is a visualization microscope diagram at the starting timing (the 1st second) after the bacteria are allowed to stand on the surface of the sample for 2 min, and the right picture is a visualization microscope diagram at the 3rd second after starting timing after the bacteria are allowed to stand on the surface of the sample for 2 min. The state observed from the microscope diagram at the time of 3 seconds after starting timing is the same as that at the time of starting timing (1^{st} second), and the bacteria are all immobile, indicating that the bacteria have been killed. FIG. 9 is real-time visualization microscope diagrams of the environment-friendly product according to Comparative Example 4 of the present application, in which the left picture is a visualization microscope diagram at the starting timing (the first second) after the bacteria are allowed to stand on the surface of the sample for 2 min, and the right picture is a visualization microscope diagram at the third second after starting timing after the bacteria are allowed to stand on the surface of the sample for 2 min; and in which there are relatively more bacteria flowing in both the left picture and the right picture (it can be seen that the position of bacteria in the upper right corner circle has changed), and the number of flowing bacteria is almost unchanged.

**Table 1**

| | Lab value test | CASS salt spray test | Antibacterial rate test of Escherichia coli (24 h) | Visualized sterilizing effect (Escherichia coli) | Remarks |
|---|---|---|---|---|---|
| Example 1 | L: 76 to 78 | 24 h, Grade 9 | 99.9% | Bacteria are killed | Composite plating layer of hexadecyl trimethyl ammonium iodide with nano-needle structure |
| | a: -1 to +1 | | | | |
| | b: -1 to +1 | | | | |
| Example 2 | L: 76 to 78 | 24 h, Grade 9 | 99.8% | Bacteria are killed | Composite plating layer of hexadecyl trimethyl ammonium iodide with nano-needle structure |
| | a: -1 to +1 | | | | |
| | b: -1 to +1 | | | | |
| Comparative example 1 | L: 76 to 78 | 24 h, Grade 9 | 88.1% | Bacteria are flowing | Composite plating layer of hexadecyl trimethyl ammonium iodide with Non-nano-needle structure |
| | a: -1 to +1 | | | | |
| | b: -1 to +1 | | | | |
| Comparative example 2 | L: 76 to 78 | 24 h, Grade 9 | 87.3% | Bacteria are flowing | Composite plating layer of hexadecyl trimethyl ammonium iodide with Non-nano-needle structure |
| | a: -1 to +1 | | | | |
| | b: -1 to +1 | | | | |
| Comparative example 3 | L: 76 to 78 | 24 h, Grade 9 | 76.3% | Bacteria are flowing | Composite plating layer without hexadecyl trimethyl ammonium iodide, with Non-nano-needle structure |
| | a: -1 to +1 | | | | |
| | b: -1 to +1 | | | | |
| Comparative example 4 | L: 76 to 78 | 24 h, Grade 9 | 69.8% | Bacteria are flowing | Composite plating layer without hexadecyl trimethyl ammonium iodide, with Non-nano-needle structure |
| | a: -1 to +1 | | | | |
| | b: -1 to +1 | | | | |

By comparing Example 1, Example 2 with Comparative Example 1, it can be seen that when the concentration of hexadecyl trimethyl ammonium iodide is 50-100 g/L, the environment-friendly white chromium composite sterilizing layers of the sterilizing and environment-friendly products can form nano-needle structures, and the sterilizing and environment-friendly products have better sterilizing effect. However, when the concentration of hexadecyl trimethyl ammonium iodide is increased to 150 g/L, the white chromium composite layer of the environment-friendly products does not form nano-needle structures, and the sterilization rate of the environment-friendly products for Escherichia coli is reduced to 88.1%.

By comparing Examples 1-2 with Comparative Examples 1-4, it can be seen that compared with a hexadecyl trimethyl ammonium iodide composite plating layer with nano-needle structure, the antibacterial rate of a hexadecyl trimethyl ammonium iodide composite plating layer without nano-needle structure is substantially reduced, indicating that the nano-needle structure is very important for sterilization effect.

In summary, the sterilizing effect of the sterilizing and environment-friendly composite plating layer according to the embodiments of the present application can be directly displayed with double transmission high-definition display technology, and the sterilizing effect of the environment-friendly products including the environment-friendly white chromium composite sterilizing layer with nano-needle structures is significantly better than that of the environment-friendly products of Comparative Examples without nano-needle structures.

Although the implementations in the present application are disclosed as above, the contents described are implementations adopted to facilitate the understanding the present application, and are not intended to limit the present application. Any person skilled in the art to which the present application belongs may make any modifications and changes in the forms and details of implementation without departing from the scope disclosed in the present application, but the scope of protection of the present application shall still be subject to the scope defined in the appended claims.

## Claims

1. A sterilizing and environment-friendly composite plating layer, comprising: a semi-bright nickel layer, a high-sulfur nickel layer and an environment-friendly white chromium composite sterilizing layer; wherein the semi-bright nickel layer is adapted to be positioned on a substrate having a sterilizing requirement; the high-sulfur nickel layer is disposed on the surface of a side of the semi-bright nickel layer away from the substrate; the environment-friendly white chromium composite sterilizing layer is disposed on the surface of a side of the high-sulfur nickel layer away from the substrate; the environment-friendly white chromium composite sterilizing layer has a nano-needle structure and is formed by a composite raw material containing sterilizing ammonium salt, and the concentration of the sterilizing ammonium salt in the composite raw material is 50-100 g/L.

2. The sterilizing and environment-friendly composite plating layer according to claim 1, wherein the sterilizing ammonium salt is selected from any one or more of alkyl quaternary ammonium iodide salt and alkyl aromatic hydrocarbyl quaternary ammonium iodide salt.

3. The sterilizing and environment-friendly composite plating layer according to claim 2, wherein the carbon chain length of the alkyl groups in the alkyl quaternary ammonium iodide salt and the alkyl aromatic hydrocarbyl quaternary ammonium iodide salt is 12-18.

4. The sterilizing and environment-friendly composite plating layer according to claim 2, wherein the sterilizing ammonium salt is selected from any one or more of dodecyl dimethyl benzyl ammonium iodide, dodecyl trimethyl ammonium iodide, tetradecyl dimethyl benzyl ammonium iodide, tetradecyl trimethyl ammonium iodide, hexadecyl dimethyl benzyl ammonium iodide, hexadecyl trimethyl ammonium iodide, octadecyl dimethyl benzyl ammonium iodide, and octadecyl trimethyl ammonium iodide.

5. The sterilizing and environment-friendly composite plating layer according to any one of claims 1 to 4, wherein the raw material of the environment-friendly white chromium composite sterilizing layer comprises: quaternary ammonium iodide salt with a concentration of 50-100 g/L, anhydrous citric acid crystal with a concentration of 10-20 g/L, Trichrome ICE Salts with a concentration of 150-400 g/L, Trichrome ICE Part 1 with a concentration of 150-350 mL/L, Trichrome ICE Make Up with a concentration of 10-25 ml/L, and Trichrome ICE WA with a concentration of 0.5-5 mL/L.

6. The sterilizing and environment-friendly composite plating layer according to any one of claims 1 to 4, wherein the raw material of the high-sulfur nickel layer comprises: nickel sulfate with a concentration of 350-450 g/L, nickel chloride with a concentration of 50-100 g/L, boric acid with a concentration of 40-60 g/L, and high-sulfur nickel HAS 90 with a concentration of 2-4 mL/L.

7. The sterilizing and environment-friendly composite plating layer according to any one of claims 1 to 4, wherein the raw material of the semi-bright nickel layer comprises: nickel sulfate with a concentration of 350-450 g/L, nickel chloride with a concentration of 30-50 g/L, boric acid with a concentration of 40-60 g/L, makeup agent NIB-90 with a concentration of 5-10 mL/L, main brightener NIB-90 with a concentration of 1-2 mL/L, and wetting agent Ni-66B with a concentration of 1-5 mL/L.

8. The sterilizing and environment-friendly composite plating layer according to any one of claims 1 to 4, wherein the thickness of the semi-bright nickel layer is 20-50 µm, the thickness of the high-sulfur nickel layer is 20-50 µm, and the thickness of the environment-friendly white chromium composite sterilizing layer is >0.5 µm.

9. A preparation method of a sterilizing and environment-friendly composite plating layer according to any one of claims 1 to 8, comprising:
(1) pretreating the substrate: comprising polishing and cleaning treatments;
(2) electroplating the semi-bright nickel layer on the surface of the pretreated substrate;
(3) electroplating the high-sulfur nickel layer on the surface of the semi-bright nickel layer; and
(4) electroplating the environment-friendly white chromium composite sterilizing layer on the surface of the high-sulfur nickel layer.

10. The preparation method according to claim 9, wherein the conditions for electroplating the semi-bright nickel layer in step (2) comprise: a temperature of 50-60°C, a cathode current density of 5-10 A/dm², and an electroplating time of 600-2700 s.

11. The preparation method according to claim 9, wherein the conditions for electroplating the high-sulfur nickel layer in step (3) comprise: a temperature of 45-55°C, a voltage of 5-10 V, a cathode current density of 3-12 A/dm², and an electroplating time of 600-2700 s.

12. The preparation method according to claim 9, wherein the conditions for electroplating the environment-friendly white chromium composite sterilizing layer in step (4) comprise: a temperature of 50-60°C, a cathode current density of 5-10 A/dm², and an electroplating time of 600-900 s.

13. A sterilizing and environment-friendly product, comprising a substrate and a sterilizing and environment-friendly composite plating layer according to any one of claims 1 to 8.

14. The sterilizing and environment-friendly product according to claim 13, wherein the substrate is a metal substrate or a plastic substrate.

15. The sterilizing and environment-friendly product according to claim 13, wherein the sterilizing and environment-friendly product is a sterilizing product used in kitchen or bathroom.
